(19) Europäisches Patentamt
European Patent Office
Office européen des brevets

(11) **EP 2 422 961 A2**

(12) **EUROPEAN PATENT APPLICATION**

(43) Date of publication:
**29.02.2012 Bulletin 2012/09**

(51) Int Cl.:
**B29D 11/00** (2006.01)   **B29C 69/02** (2006.01)

(21) Application number: **11179353.5**

(22) Date of filing: **30.08.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.08.2010 US 873284**

(71) Applicant: **SKC Haas Display Films Co., Ltd.**
**Choongchungnamdo (KR)**

(72) Inventors:
• **Lei, Herong**
**Acton, MA Massachusetts 01720 (US)**

• **Landry, Michael R.**
**Wolcott, NY New York 14590 (US)**
• **Mi, Xiang-Dong**
**Northborough, MA Massachusetts 01532 (US)**
• **Greener, Jehuda**
**Rochester, NY New York 14618 (US)**
• **Lee, Ju-Hyun**
**Westborough, MA Massachusetts 01581 (US)**

(74) Representative: **Buckley, Guy Julian**
**Patent Outsourcing Limited**
**1 King Street**
**Bakewell**
**Derbyshire DE45 1DZ (GB)**

(54) **Optical sheet having printed double-sided light guide plate**

(57) The present invention provides an optical sheet having a plurality of light guide plate patterns, each light guide plate pattern having a micro-patterned output surface for emitting light, and a micro-patterned bottom surface opposing to the output surface. The optical sheet is made in steps comprising extruding a first resin into the nip between a pressure roller (478b) and a patterned roller (480b) to form an extruded layer (410b) at a patterned roller surface temperature T1 and a nip pressure P1, the layer having an unpatterned surface and a patterned surface, the patterned surface having a pattern transferred from the patterned roller; and printing (492) a discrete pattern (252) on the unpatterned surface of the extruded layer to form the optical sheet comprising the plurality of light guide plate patterns.

FIG. 10

EP 2 422 961 A2

**Description**

**FIELD OF THE INVENTION**

This invention generally relates to an aptical sheet, and more particularly to an optical sheet having a double-sided light guide plate and a process for making such.

**BACKGROUND OF THE INVENTION**

Liquid crystal displays (LCDs) continue to improve in cost and performance, becoming a preferred display technology for many computer, instrumentation, and entertainment applications. Typical LCD mobile phones, notebooks, and monitors comprise a light guide plate for receiving light from a light source and redistributing the light more or less uniformly across the LCD. Existing light guide plates are typically between 0.8 mm and 2 mm in thickness. The light guide plate must be sufficiently thick in order to couple effectively with the light source, typically a CCFL or a plurality of LEDs, and redirect more light toward the viewer. Also, it is generally difficult and costly to make a light guide plate with a thickness smaller than about 0.8 mm and a width or length greater than 60 mm using the conventional injection molding process. On the other hand, it is generally desired to slim down the light guide plate in order to lower the overall thickness and weight of the LCD, especially as LEDs are becoming smaller in size. Thus, a balance must be struck between these conflicting requirements in order to achieve optimal light utilization efficiency, low manufacturing cost, thinness, and brightness.

In most applications, the light guide plate must be patterned on one side ("one-sided light guide plate") in order to achieve sufficient light extraction and redirection ability. However, in some cases, e.g., in turning film systems, micro-patterning on both sides of the plate is desired ("double-sided light guide plate"). The use of a turning film in a backlight unit of a LCD was shown to reduce the number of light management films needed to attain sufficiently high levels of luminance. Unfortunately, achieving good replication of both patterns when the plate is relatively thin (< 0.8mm) has been a major barrier in the acceptance of the turning film option. Indeed, the choice of a method for producing thin, double-sided light guide plates is crucial for controlling cost, productivity and quality, making the turning film technology more economically attractive.

The method of choice heretofore has been the injection molding process and some variants thereof. In this process a hot polymer melt is injected at high speed and pressure into a mold cavity having micro-machined surfaces with patterns that are transferred onto the surfaces of the solidified molded plate during the mold filling and cooling stages. Injection molding technology is quite effective when the thickness of the plate is relatively large ($\geq$ 0.8 mm) and its lateral dimensions (width and/or length) are relatively small ($\leq$ 300mm). However, for relatively thin plates ($\leq$ 0.8 mm) with micro-patterns on both principal surfaces, the injection molding process requires significant levels of injection pressure which typically leads to poor replication and high residual stress and birefringence in the molded plate, creating poor dimensional stability and low production yields.

Another approach used to produce one-sided light-guide plates (micro-pattern on one surface) is to print a discrete micro-pattern on one side of a flat, extruded cast sheet using ink-jet, screen printing or other types of printing methods. This process is disadvantaged in that the extrusion casting step requires an additional costly printing step and the shape and dimensions of the discrete micro-extractors are predetermined and not well-controlled. This approach becomes much less attractive when both surfaces are to be patterned, as required in the present invention.

The continuous, roll-to-roll extrusion casting process is well-suited for making thin, one-sided micro-patterned films as disclosed in U.S. Pat. No. 5,885,490 (Kawaguchi et al.), U.S. Pat. Pub. No. 2007/0052118 A1 (Kudo et al.), U.S. Pat. No. 2007/0013100 A1 (Capaldo et al.) and U.S. Pat. No. 2008/0122135 (Hisanori et al.). Kawaguchi et al. consider the possibility of imparting patterns on both sides of the product film by casting a molten resin onto the patterned surfaces of flexible carrier films passing through a nip region formed by two counter-rotating rollers. This method is inherently costly because the patterning surface is itself a film which must be prepared separately before the casting process and then discarded after very limited use. Capaldo et al. disclose an extrusion casting method for making films with controlled roughness on one surface. Hisanori et al. and Kudo et al. disclose also film patterning methods using extrusion casting, but they limit their disclosures to single-sided films. Kudo et al. specifically require that the patterning roller has a relatively high surface temperature ($>$ Tg + 20°C). A method for making thick light guide plates using the extrusion casting process is disclosed by Takada et al. (WO 2006/098479) but the method is again limited to making one-sided light guide plates.

Thus, while there have been solutions proposed for a particular light guide plate and for methods of making such a plate through extrusion, roll-to-roll operations, there remains a need to prepare cost-effectively double-sided light guide plates, of the type disclosed in the present invention, using a single pass extrusion casting process.

**SUMMARY OF THE INVENTION**

The present invention provides an optical sheet having a plurality of light guide plate patterns, each light guide plate pattern having a micro-patterned output surface for emitting light, and a micro-patterned bottom surface opposing to the output surface. The optical sheet is made in steps comprising extruding a first resin into the nip between a pressure roller and a patterned roller to form an extruded layer at a patterned roller surface temperature T1 and a nip pressure P1, the layer having an unpatterned surface and a patterned surface, the patterned surface having a pattern transferred from the patterned roller; and printing a discrete pattern on the unpatterned surface of the extruded layer to form the optical sheet comprising the plurality of light guide plate patterns.

**BRIEF DESCRIPTION OF THE DRAWINGS**

Figure 1 shows a schematic of a large optical sheet comprising a plurality of light guide plate patterns;
Figures 2A and 2B show a bottom view and a side view of a light guide plate cut from the large optical sheet shown in Figure 1;
Figure 2C shows a unit area used in the definition of the density function for the discrete elements patterned on one surface of the light guide plate;
Figure 3A shows an expanded side view of the light guide plate in a backlight unit viewed in a direction parallel to the width direction;
Figure 3B shows an expanded side view of the light guide plate viewed in a direction parallel to the length direction;
Figure 3C is a top view of linear prisms on the light guide plate;
Figure 3D is a top view of curved wave-like prisms on the light guide plate;

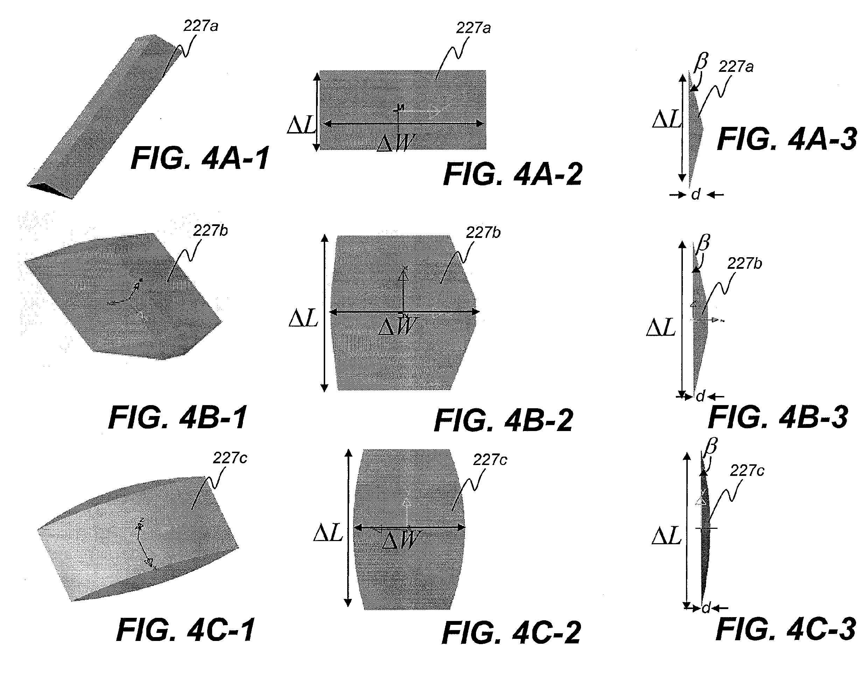

Figures 4A-1, 4A-2, and 4A-3 show perspective, top, and side views of the first kind of discrete elements;
Figures 4B-1, 4B-2, and 4B-3 show perspective, top, and side views of the second kind of discrete elements;
Figures 4C-1, 4C-2, and 4C-3 show perspective, top, and side views of the third kind of discrete elements;

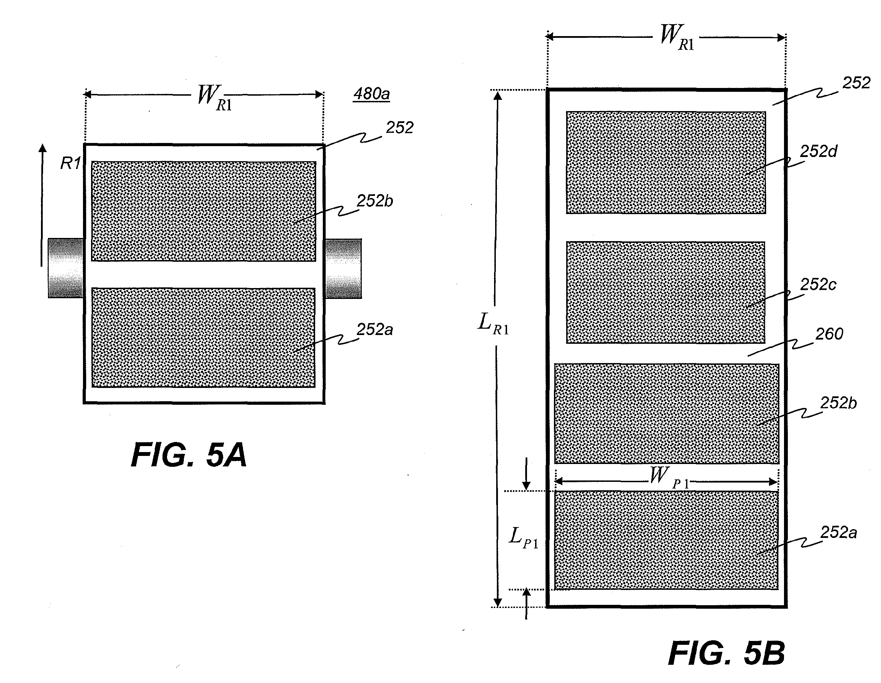

Figures 5A and 5B are schematic front and unfolded views, respectively, of a patterned roller comprising a plurality of sub-patterns;

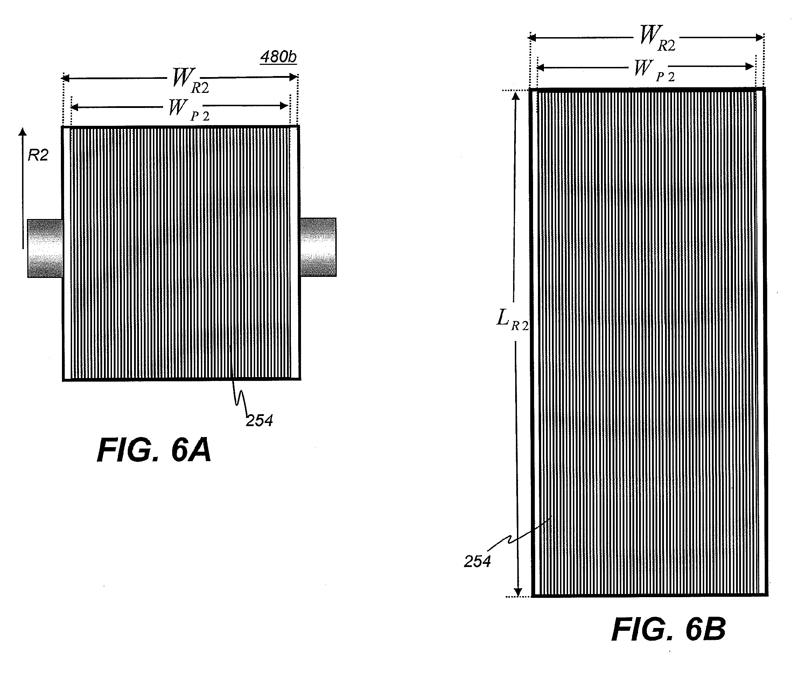

Figures 6A and 6B are schematic front and unfolded views, respectively, of a pattern roller comprising a continuous pattern;

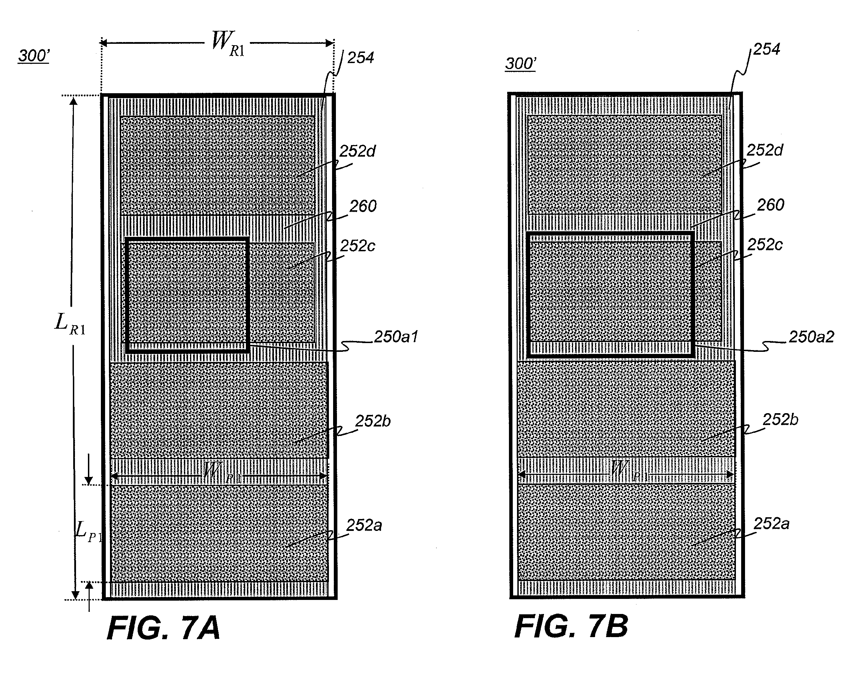

Figure 7A and 7B show different light guide plates that can be cut from an optical sheet made using the two rollers shown in Figures 5A - 6B;

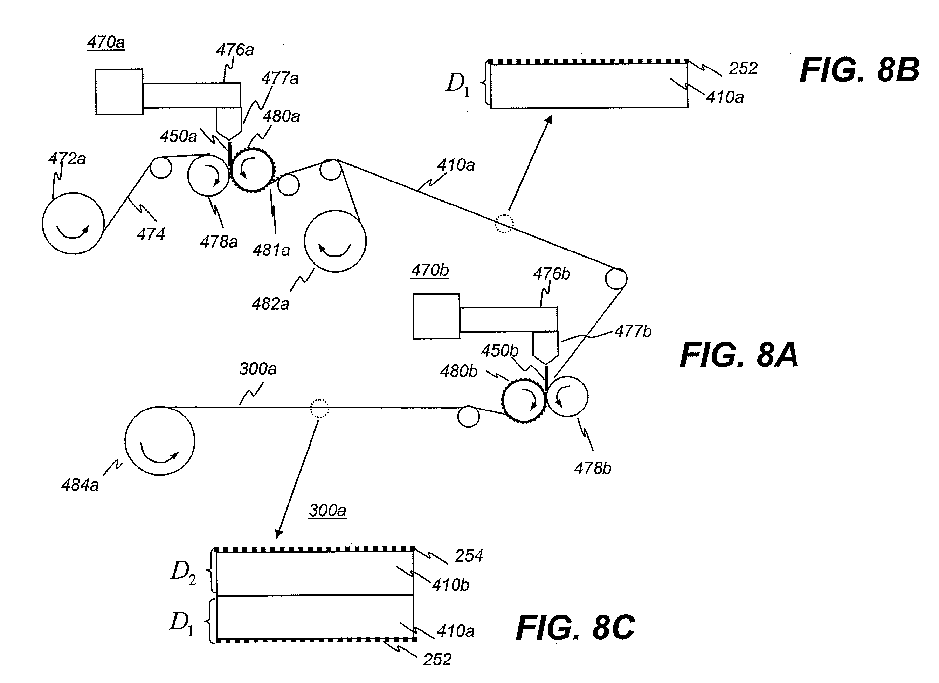

Figure 8A shows schematically an apparatus and process for making the optical sheet of the present invention;
Figures 8B and 8C are schematic cross-sectional views of the first patterned layer and the final optical sheet made in the process of Figure 8A;

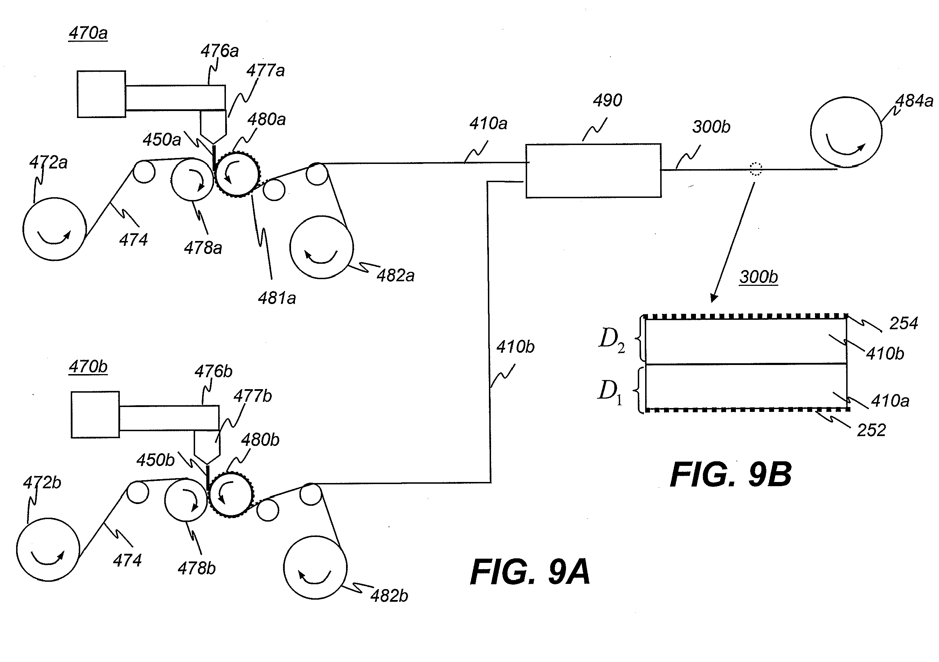

Figure 9A shows schematically an apparatus and process for making the optical sheet of the present invention;
Figure 9B is a schematic cross-sectional view of the final optical sheet made in the process of Figure 9A;

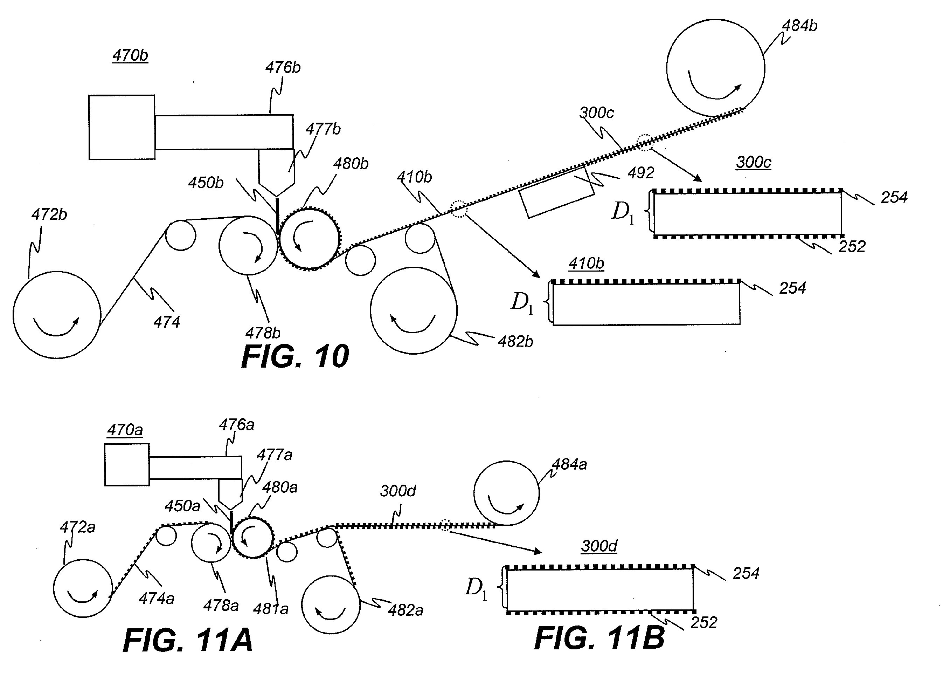

Figure 10 shows schematically an apparatus and process for making the optical sheet of the present invention;
Figure 11A shows schematically an apparatus and process for making the optical sheet of the present invention;
Figure 11B is a schematic cross-sectional view of the final optical sheet made in the process of Figure 11A;

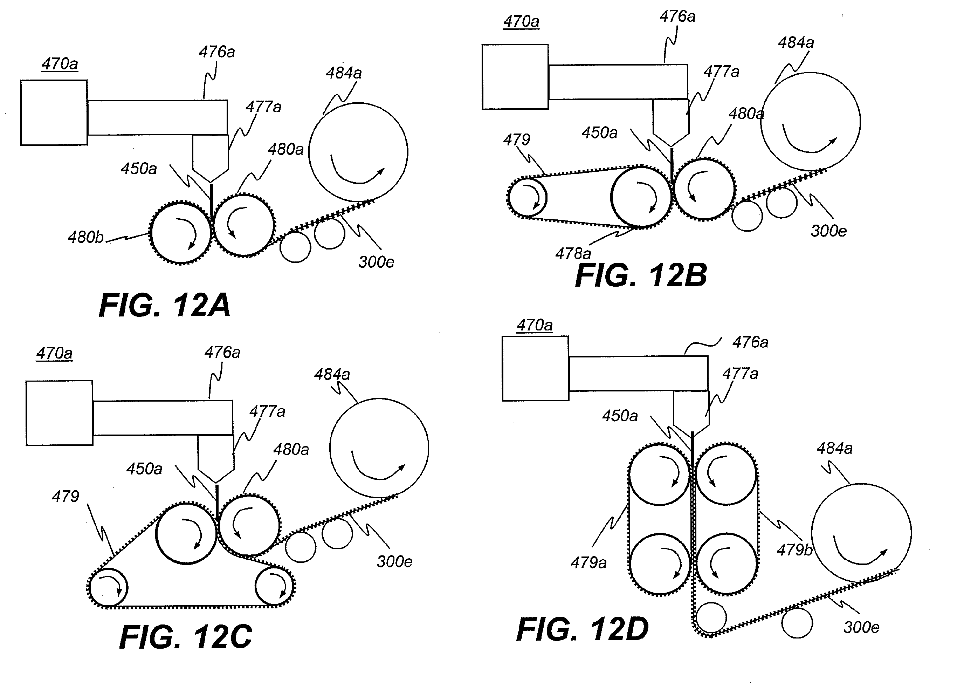

Figure 12A shows schematically an apparatus and process for making the optical sheet of the present invention; and,
Figures 12B, 12C, 12D show schematically three variations of the invention as shown in Figure 12A.

**DETAILED DESCRIPTION OF THE INVENTION**

The light guide plate of the present invention uses light-redirecting micro-structures that are generally shaped as prisms placed on one surface thereon and light-extracting micro-structures shaped as discrete elements and placed on the opposite surface of the light guide plate. True prisms have at least two planar faces. Because, however, one or more surfaces of the light-redirecting structures need not be planar in all embodiments, but may be curved or have multiple sections, the more general term "light redirecting structure" is used in this specification.

Large optical sheet having a plurality of light guide plate patterns

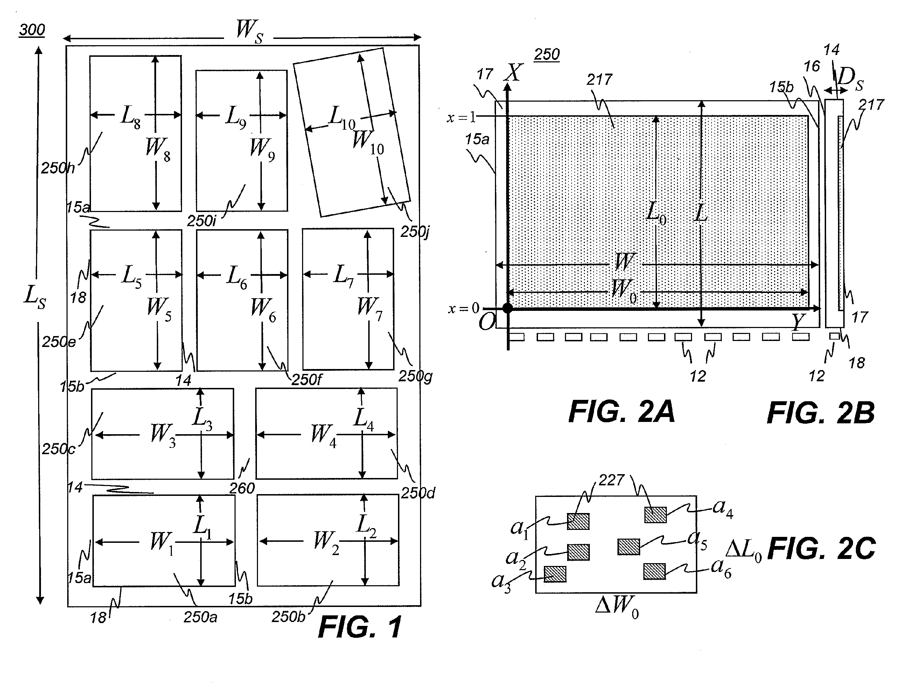

Figure 1 shows a top view of a large optical sheet 300 of the present invention. Optical sheet 300 is said to be large when its length $L_S$ is greater than or equal to 0.8 m, more preferably greater than or equal to 1.0 m, and most preferably greater than or equal to 1.4 m, and its width $W_S$ is greater than or equal to 0.3 m, more preferably greater than or equal to 0.6 m, and most preferably greater than or equal to 0.9 m. Optical sheet 300 has a thickness $D_S$ in a range of between about 0.05 mm and about 2 mm, and more preferably in a range of between about 0.1 mm and about 0.7 mm, and most preferably in a range of between about 0.2 mm and about 0.5 mm. Optical sheet 300 has at least 2 light guide plate patterns thereon, more preferably at least 4 light guide plate patterns thereon, and most preferably at least 20 light guide plate patterns thereon.
Optical sheet 300 shown in Figure 1 comprises light guide plate patterns 250a - 250j, each of which also has a length and a width. For example, light guide plate pattern 250a has a length $L_1$ and a width $W_1$, while light guide plate pattern 250e has a length $L_5$ and a width $W_5$. Each light guide plate pattern also has an input surface 18, an end surface 14, and two side surfaces 15a, 15b. The advantage of having a plurality of light guide plate patterns made on the same optical sheet is improved productivity and reduced cost per light guide plate. In case when a light guide plate pattern is not rectangular, its width and length are defined as maximum dimensions in two orthogonal directions.

Light guide plates cut from the large optical sheet

Figures 2A and 2B show, respectively, a bottom view and a side view of a light guide plate 250 cut from the large optical sheet 300. The light guide plate 250 can be any of the light guide plates 250a - 250j in Figure 1. It has a length L and a width W . When used in a backlight unit of a LCD, a light guide plate is always coupled to one or more light sources 12. The width W is defined to be parallel to the light sources 12 aligned along the Y-direction, while the length L is defined to be orthogonal to the width W or Y-direction.

The length L and width W usually vary between 20 mm and 500 mm depending on the application. The thickness $D_S$ of light guide plate 250 is generally uniform, meaning that the variation of the thickness is usually less than 20%, more preferably less than 10%, and most preferably less than 5%.

Light guide plate 250 has a micro-pattern 217 of discrete elements represented by dots on its bottom surface 17. The pattern 217 has a length $L_0$ and a width $W_0$, which are parallel and orthogonal, respectively, to the line of light sources 12. Generally, the pattern 217 has a smaller dimension than light guide plate 250 in the length direction, in the width direction, or in both directions. Namely, $L_0 \leq L$ and $W_0 \leq W$ . The size and number of discrete elements may vary along the length direction and the width direction.

The 2-dimensional (2D) density function of discrete elements $D^{2D}(x, y)$ at location (x, y) is defined as the total area of discrete elements divided by the total area that contains the discrete elements, where $x = X / L_0$, $y = Y / W_0$, $X$ and $Y$ are the distance of a discrete element measured from origin O along the length and width directions. The origin O is chosen to be located at a corner of the pattern near input surface 18 of light guide plate 250 for convenience. In one example shown in Figure 2C, six discrete elements 227 having areas of $a_1, a_2, a_3, a_4, a_5, a_6$ are located in an arbitrary rectangle having a small area of $\Delta W_0 \cdot \Delta L_0$. The density of discrete elements in this small area is $\sum_{i=1}^{N} a_i / (\Delta W_0 \cdot \Delta L_0)$, , where N=6, representing the total number of discrete elements in the small area of $\Delta W_0 \cdot \Delta L_0$. The discrete elements confined in this area may have the same area.

Generally, the density function of discrete elements $D^{2D}(x, y)$ varies with location (x, y). In practice, the density function $D^{2D}(x, y)$ varies weakly along the width direction, while it varies strongly along the length direction. For simplicity, one dimensional density function D(x) is usually used to characterize a pattern of discrete elements and can be calculated, for example, as $D(x) =$ $\int D^{2D}(x,y)dy \approx W_0 D^{2D}(x,0)$. Other forms of one-dimensional (1D) density function can also be easily derived from the 2D density function $D^{2D}(x,y)$. In the following, the independent variable x should be interpreted as any one that can be used to calculate a 1-dimensional density function D(x). For example, x can be the radius from the origin O if the light source is point-like and located near the corner of the light guide plate.

As shown in Figure 2B, light guide plate 250 has a light input surface 18 for coupling light emitted from light source 12, an output surface 16 for emitting light out of the light guide plate 250, an end surface 14 which is opposite of the input surface 18, a bottom surface 17 opposite of the output surface 16, and two side surfaces 15a, 15b. Light source 12 can be a single linear light source such as a cold cathode fluorescent lamp (CCFL) or a plurality of point-like sources such as light emitting diodes (LEDs). Alternatively, the pattern 217 can be on the output surface 16 of light guide plate 250.

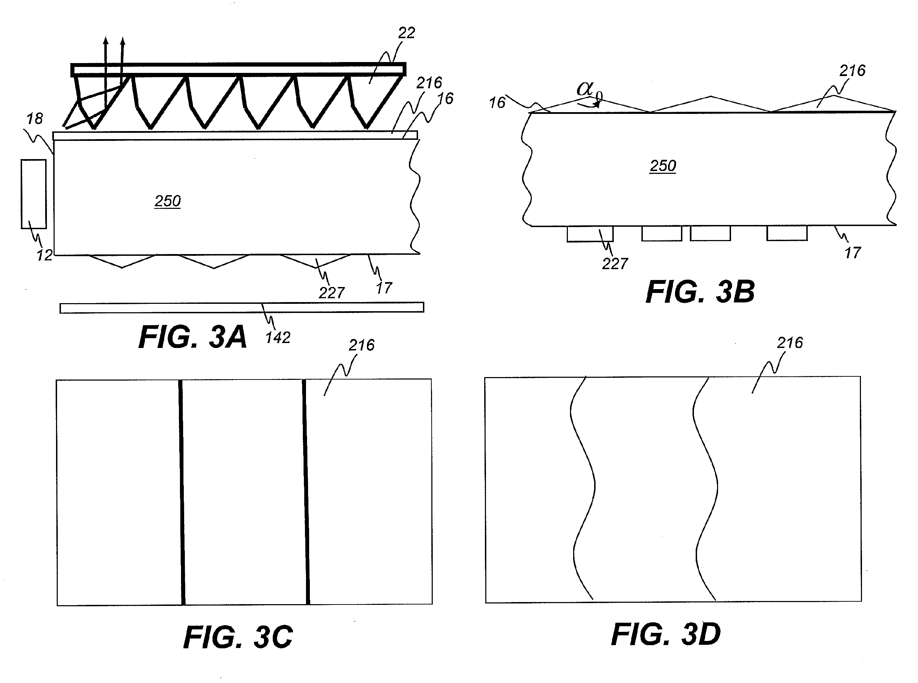

Figure 3A shows an expanded side view of light guide plate 250, a prismatic film such as a turning film 22, and a reflective film 142 when viewed in a direction parallel to the width direction. On the output surface 16 of light guide plate 250 are a plurality of prisms 216, and on the bottom surface 17 are a plurality of discrete elements 227. Figure 3B shows an expanded side view of light guide plate 250 when viewed along the length direction. Each prism 216 on the output surface 16 generally has an apex angle $\alpha_0$. The prism may have a rounded apex. Figure 3C is a top view of prisms 216. In this example, the prisms are parallel to each other. In another example, shown in Figure 3D, the prisms 216 are curved wave-like. Prisms with any known modification may be used in the present invention. Examples include prisms with variable height, variable apex angle, and variable pitches.

Figures 4A-1, 4A-2, and 4A-3 show perspective, top, and side views, respectively, of the first kind of discrete elements 227a that can be used according to the present invention. Each discrete element is essentially a triangular segmented prism. Figures 4B-1, 4B-2, and 4B-3 show perspective, top, and side views, respectively, of the second kind of discrete elements 227b that can be used according to the present invention. Each discrete element is essentially a triangular segmented prism with a flat top. Figures 4C-1, 4C-2, and 4C-3 show perspective, top, and side views, respectively, of the third kind of discrete elements 227c that can be used according to the present invention. Each discrete element is essentially a rounded segmented prism. Discrete elements of other known shape such as cylinders and hemispheres can also be used. They may or may not be symmetrical. The above examples are not inclusive and other types of elements may be used with the present invention.

While discrete elements having the above shapes are generally known, the discrete elements most useful for the large optical sheet 300 are relatively shallow and have the following key features: their height d is smaller than their length ΔL and their width ΔW. More specifically, the height d is preferably less than or equal to 12 μm, more preferably less than or equal to 10 μm, and most preferably less than or equal to 6 μm; while both length AL and width ΔW are preferably greater than or equal to 15 μm, more preferably greater than or equal to 20 μm, and most preferably greater than or equal to 25 μm. Generally, both length ΔL and width ΔW are smaller than 100 μm.

Alternatively, the ratios d/ΔL and d/ΔW are preferably less than or equal to 0.45, more preferably less than or equal to 0.3, and most preferably less than or equal to 0.2.

Discrete elements having the above characteristics have a few advantages and enable the following processes for making the optical sheet containing the discrete elements. Firstly, they are easy to produce on a pattern roller. Usually 1 diamond tool is sufficient for engraving a 0.8 m wide roller with discrete elements having the above characteristics without having noticeable tool wear-out. Secondly, a pattern formed of such discrete elements is easy to transfer with good replication fidelity from a patterned roller to the optical sheet at relatively low pressures and temperatures. Thirdly, a pattern formed of such discrete elements has a long life time due to little wear-out. Finally, a light guide plate having such a pattern is not prone to abrade an adjacent component in a backlight unit. These advantages will become more apparent when discussing the methods for making the large optical sheet in the following.

In a comparative example, discrete elements have a length ΔL = 50 μm, a width ΔW = 50 μm, and a height d = 25 μm and thus do not possess the dimensional characteristics of the present invention. Typically, 2 to 4 diamond tools are required to engrave a 0.8 m wide roller of radius of 0.23 m due to tool wear-out. The pattern having such discrete elements are difficult to produce on a patterned roller because the large ratios d/ΔL and d/ΔW make diamond tools prone to fracture. Additionally, the pattern having such discrete elements cannot be readily transferred from a patterned roller to the optical sheet 300 in the preferred process embodiment discussed below. Moreover, a patterned roller having such a pattern cannot be used many times before the pattern deforms or fractures. Lastly, a light guide plate having such a pattern is likely to abrade an adjacent component.

Method for making a double-sided optical sheet and a light guide plate

In one method, the process for making a double-sided light guide plate comprises the following three key steps: 1. Preparation of two patterned rollers; 2. Making of a large optical sheet comprising a plurality of light guide plate patterns through an extrusion casting process using the two patterned rollers; and 3. Cutting the large optical sheet into a plurality of double-sided light guide plates with specified length and width dimensions. These steps are described in the following.

Preparation of patterned rollers

Referring to Figures 5A and 5B, a pattern 252 comprising a plurality of sub-patterns 252a - 252d is produced on a patterned roller 480a by, for example, direct micro-machining methods using a suitable diamond tool. Figure 5A shows a front view of sub-patterns 252a, 252b on the patterned roller 480a, which has a radius $R_1$ and a width $W_{R1}$. Figure 5B shows a view of unfolded pattern 252 comprising four sub-patterns 252a - 252d. The pattern 252 has a length $L_{R1}$, where $L_{R1} = 2\pi R_1$. The sub-pattern 252a has a width $W_{P1}$ and a length $L_{P1}$. The four sub-patterns may have the same or different widths or lengths. In one example, $R_1 \approx 152$ mm, $L_{R1} = 2\pi R_1 \approx 955$ mm, $W_{R1} = 406$ mm, $L_{P1} = 182$ mm, and $W_{P1} = 396$ mm. Typically, there is empty space between two neighboring sub-patterns. However, in some cases it is possible to minimize the empty space between two neighboring sub-patterns to improve utilization effectiveness of the roller surface. In either case, the density function (discussed earlier) in each sub-pattern varies either in length and/or width directions. In one example, the density function decreases first and then increases.

Similarly, another pattern 254 is produced on another patterned roller 480b by any known engraving method. Figures 6A and 6B show a front and unfolded views of the pattern 254 on the patterned roller 480b. Patterned roller 480b has a radius $R_2$, a length $L_{R2} = 2\pi R_2$, and a width $W_{R2}$. The pattern 254 has a width $W_{P2}$ and a length $L_{P2}$. In one example, $R_2 = R_1 \approx 152$ mm, $L_{R2} = L_{P2} = 2\pi R_2 \approx 955$ mm, $W_{R2} = W_{R1} = 406$ mm, and $W_{P2} = 400$ mm. The pattern 254 shown in Figure 6A and 6B is a linear pattern parallel to the length direction of the roller 480b. The linear pattern can be any known linear prismatic, lenticular or cylindrical pattern. It may have variable or constant pitch, height, or shape.

In another example, the pattern 254 is arranged at an angle relative to the width direction of the roller 480b. In yet another example, the second pattern 254 is a wave-like linear prismatic pattern. In yet another example, the second pattern 254, as for the first pattern 252, comprises a plurality of sub-patterns. In yet still another example, the coverage of the second pattern 254 is small compared to the size of the roller 480b, that is, the ratio $W_{P2} / W_{R2} < 0.1$. In an extreme case, the ratio $W_{P2} / W_{R2}$ is near zero when the pattern 254 essentially has little or no engraved micro-features.

As shown in Figures 5B and 6B, pattern 252 comprises a plurality of discrete sub-patterns 252a - 252d, each of the sub-patterns contains discrete elements as shown in Figures 2C and 4A-1 through 4C-1, while pattern 254 is a continuous pattern. However, pattern 254 can also be a pattern having discrete elements similar to pattern 252.

The patterns produced on the roller surfaces are the inverse ("negative") of the patterns designed for the light guide plates to be made by the extrusion casting process. Another option of imparting a micro-pattern to the roll surface involves wrapping the roller with a patterned sheet or sleeve, which can be a patterned carrier film 474a to be described below in reference to Figure 11A, or a patterned belt 479, 479a or 479b to be described below in reference to Figures 12B - 12D. The patterned sheet or sleeve can be metallic or polymeric. After the patterns 252 and 254 are produced on the patterned rollers 480a, 480b, respectively, the optical sheet 300', in the form of optical sheets 300a, 300b, 300c, 300d, and 300e, can be made in one of several extrusion casting process embodiments.

Figures 7A and 7B show a top view of optical sheet 300' having pattern 252 on one side and pattern 254 on the other side. Two light guide plates 250a1 and 250a2 having different sizes and empty spaces can be cut from the same sub-pattern 252c. This flexibility in changing the dimensions of the light guide plate is enabled by the large optical sheet of the present invention.

Extrusion casting process

Advantageously, the extrusion casting method of the present invention is shown schematically in Figure 8A. The process comprises the following:

(1) A polymeric resin 450a with the requisite physical and optical properties is extruded through a first extrusion station 470a having a first extruder 476a and a first sheeting die 477a onto a stiff but flexible polymeric carrier film 474 fed from a supply roller 472a into the first nip between two counter-rotating rollers 480a and 478a. As discussed earlier, roller 480a is a patterned roller with a micro feature pattern 252 designed for the light guide plates of the present invention. The surface temperature $T_{PaR,1}$ of roller 480a is maintained such that $T1 > T_{g1} - 50°C$, where $T_{g1}$ is the glass transition temperature of the first extruded resin 450a. Roller 478a, the first pressure roller, has a soft elastomeric surface and a surface temperature $T_{P,1} < T1$. The nip pressure P between the two rollers is maintained such that P > 8 Newtons per millimeter of roller width.

(2) The carrier film 474 and the cast resin issuing from the nip region adhere preferentially to the patterned roller 480a forming a sheet with a desired thickness until solidifying some distance downstream from the nip.

(3) The solidified sheet and the carrier film are stripped off of the patterned roller, and taken up under controlled tension. Then the carrier film is peeled off from the formed patterned sheet some distance downstream from the stripping point 481a. The formed patterned sheet comprises the first layer 410a of the light guide plate. Figure 8B is an expanded view of the first layer 410a, in which the pattern 252 is schematic and not drawn to scale. The first layer 410a has a thickness $D_1$, which typically varies from 0.025 mm to 0.5 mm. $D_1$ is preferably in the range of between about 0.05 mm to 0.35 mm, and more preferably in the range of between about 0.15 mm to 0.25 mm.

(4) The first layer 410a is then fed into a second extrusion station 470b having a second patterned roller 480b and a second pressure roller 478b. The patterned side having pattern 252 of the first layer 410a is oriented towards a second pressure roller 478b and conveyed through the second nip region between the rollers 480b and 478b while a second layer of resin 450b is cast from extruder 476b through sheeting die 477b onto the unpatterned side of the first layer 410a. The pressure in the second nip region is controlled at P > 8 Newtons per millimeter of roller width. The surface temperature of patterned roller 480b is $T2 > T_{g2} - 50°C$, where $T_{g2}$ is the glass transition temperature of the second extruded resin 450b and the temperature of pressure roller 478b is $T_{P,2} < T2$. The pattern 254 on the surface of roller 480b is transferred from roller 480b to the resin cast into the second nip region.

(5) The resin 450b passing through the second nip region adheres to the first layer 410a to form the composite optical sheet 300a. The composite optical sheet solidifies some distance downstream from the second nip. Figure 8C is an expanded view of the optical sheet 300a having layers 410a and 410b in which the patterns 252, 254 are schematic and not drawn to scale. Layer 410b has a thickness $D_2$, which can vary from 0.025 mm to 0.5 mm. $D_2$ is preferably in the range of between about 0.05 mm to 0.35 mm, and more preferably in the range of between about 0.15 mm to 0.25 mm. The total thickness of the optical sheet has a thickness $D_1 + D_2$, which is typically in the range of 0.05 mm to 1.0 mm, preferably in the range of 0.1 mm to 0.7mm, and more preferably in the range of 0.3 mm to 0.5 mm.

(6) The solidified optical sheet 300a is stripped from roller 480b and taken up under controlled tension into a take-up station where the sheet is either finished (sheeted) in-line or wound on roller 484a for finishing at a later time. This sheet contains a plurality of light guide plate patterns which then must be cut to the final specified length and width dimensions of the designed light guide plates.

The resin 450b extruded in the second extrusion station 470b need not be the same as the resin 450a extruded in the first station 470a and the thicknesses of the first and second layers need not be identical (in general $D_1 \neq D_2$) so long as the final thickness D and optical properties of the composite plate meet the design requirements. The order of applying patterns 252 and 254 is inconsequential and would be dictated by practical considerations.

In one example, the molten resins 450a, 450b are polycarbonate (PC), with a glass transition temperature Tg of about 145°C. In another example, the molten resins 450a, 450b are impact modified PMMA, with a glass transition temperature Tg in the range 95 - 106°C. Impact modified PMMA is less brittle than pure PMMA and proved to be easier to extrude then unmodified PMMA. In yet another example, the molten resins 450a, 450b are polyolefinic polymers.

The double-sided optical sheet 300a, can also be made with only one extrusion station in a two-pass process. Specifically, after extruding the first layer of polymeric resin 450a into the nip to make the first layer film using the first patterned roller 480a, the first layer film can be wound up into a roll and stored for later use. The first patterned roller 480a is then replaced with the second patterned roller 480b, and the first layer film roll is unwound and conveyed back into the nip with its patterned side oriented towards the pressure roller. A second layer of polymeric resin 450b is cast from the same extruder 476a and sheeting die 477a onto the unpatterned side of the first layer to form the optical sheet 300a. Although this method requires only a single extrusion station, it does take an extra pass to complete the manufacture of the optical sheet 300a and would be generally economically disadvantaged.

The use of a carrier film 474 in making the first layer is optional in some cases, although controlling the quality of the manufactured film without the use of a carrier film, would be generally more difficult.

Advantageously, the extrusion casting process of the present invention is shown schematically in Figure 9A. Two single-sided micro-patterned layers 410a, 410b are formed separately in two extrusion stations 470a and 470b in a manner similar to the formation of the first layer of the invention of Figure 8A. The two formed patterned layers 410a, 410b are laminated together in a lamination station 490 by adhering the unpatterned surfaces of both layers to one another to form a single optical sheet 300b with patterns 252 and 254 on each surface of the sheet as shown in Figure 9B. Similarly, this sheet contains a plurality of light guide plate patterns which then must be cut to the final specified length and width dimensions of the designed light guide plate.

Lamination of the two solid layers can be accomplished in a variety of ways including: solvent lamination, pressure lamination, UV lamination or heat lamination. Solvent lamination is performed by applying to one or both surfaces a thin solvent layer that tackifies the unpatterned surface of the layer thereby promoting adhesion. Excess solvent is then removed by drying. Pressure lamination is accomplished by using a pressure sensitive adhesive that adheres well to both surfaces. In UV lamination the surface of one or both films is coated with a UV adhesive which promotes adhesion after UV curing of the adhesive layer. In heat lamination, a temperature sensitive layer is applied to one or both surfaces and then heated to a temperature well below the Tg of the light guide plate resin, thus promoting adhesion between the layers without distorting the patterned layers. In all lamination methods (except solvent lamination) the adhesive layer preferably have optical properties (especially refractive index, color and transmittance) sufficiently close to those of the light guide plate resin in order to minimize impact on the optical performance of the light guide plate. The lamination and extrusion steps can be performed in-line, as shown in Figure 9A, or off-line, in a way where the extrusion and lamination steps are decoupled. The use of carrier films in this process is optional, and a machine can be designed to make the first layer and/or the second layer without the use of carrier film 474.

Advantageously, the extrusion casting process of the present invention is shown schematically in Figure 10. A single-sided layer 410b having a pattern 254 is produced in a manner similar to the production of the layer 410b as shown in Figure 9A. The pattern 252 is then imparted on the unpatterned side of the layer 410b to form an optical sheet 300c by a suitable printing method. For example, the single-sided layer 410b passes through a printing station 492 wherein pattern 252 is printed on the unpatterned side of film 410b. Many types of printing methods can be selected for this step including ink-jet printing, screen printing and the like. In any case, the optical properties of the transparent ink must be carefully matched to those of the extruded layer. If the printing material (ink) is UV-sensitive, a UV station must be placed immediately after the printing station to cure the printed ink. The final optical sheet 300c has its total thickness $D_1$ nominally the same as the thickness of the layer 410b, while the total thickness of optical sheets 300a, 300b are much greater than that of the layer 410b in Figures 8C and 9B. Optical sheet 300c, similar to optical sheets 300a and 300b, also contains a plurality of light guide plate patterns which then must be cut to the final specified length and width dimensions. The printing and extrusion steps can be performed in-line, as shown in Figure 10, or off-line, in a way where the extrusion and printing steps are decoupled. The use of a carrier film in this process is optional, and a machine can be designed to make the layer 410b without the use of the carrier film 474. This method requires one less micro-machined patterned roller compared to other embodiments but the printing method may be limited to the shape and size of discrete elements generated in this way.

Advantageously, the extrusion casting process of the present invention is shown schematically in Figure 11A. Namely, the carrier film is a micro-patterned carrier film 474a. A polymeric resin 450a is extruded through extruder 476a and sheeting die 477a onto this patterned carrier film. The carrier film and the cast resin adhere preferentially to the patterned roller 480a forming a sheet, until solidifying some distance downstream from the nip. The solidified sheet and the carrier film are stripped off of the patterned roller 480a, taken up under controlled tension and the patterned carrier film is peeled off from the formed patterned sheet some distance downstream from the stripping point 481a. The final optical sheet 300d as shown in Figure 11B has pattern 254 on one surface transferred from the patterned carrier film 474a, and pattern 252 on the other surface transferred from the patterned roller 480a. This sheet contains a plurality of light guide plate patterns which then must be cut to the final specified length and width dimensions of the designed light guide plate.

Patterned roller 480a or 480b need not have a pattern engraved on the roller surface. Instead, the pattern can be produced by a patterned film wrapped around the roller, similar to the patterned carrier film 474a shown in Figure 11A.

In the present invention, if a carrier film is used to facilitate conveyance of the formed resin from the nip region past the stripping point, the carrier film must meet several key requirements: it must be stiff and flexible and it must retain its dimensional integrity and physical properties under the elevated temperatures and pressures encountered in the nip region wherein a hot melt is cast onto the carrier film. Furthermore, the surface of the film must be very smooth and it needs to be weakly adhered to the solidified resin so that it can be easily peeled off from the formed patterned film at some point downstream from the stripping point. Examples of materials that meet these requirements include, but are not limited to, biaxially oriented PET and PEN films, polysulfone films and polyarylate films.

Advantageously, the extrusion casting process of the present invention is shown schematically in Figure 12A. Namely, the optical sheet 300e of the present invention is prepared in a single patterning step by placing patterns on both the patterned roller 480a and the pressure roller 480b and without the use of a carrier film. Because of the short residence time and contact time of the resin with the patterned pressure roller 480b in the nip region, it is preferred that the pattern transferred from the pressure roller 480b be easy to replicate (e.g., very shallow prisms) in order to achieve acceptable replication fidelity on both sides of the patterned sheet. Additionally, by coextruding a layer of a different resin on the side of the pressure roller with easier replication and forming characteristics it is possible to achieve better replication at shorter contact times. Examples of resins that can be useful in this aspect are polymers similar in composition to the bulk polymer used for the light guide plate but with lower molecular weight, or resins formulated with appropriate plasticizers. In one example, the final optical sheet 300e has patterns 252 and 254 on its two surfaces. This method is the simplest to implement but may not be optimal for quality and cost.

Alternatively, Figure 12B provides a slightly modified method of Figures 12A and 11A. The extrusion casting process shown in Figure 12B is identical to that shown in Figure 12A except that a micro-feature patterned belt 479 conveyed over roller 478a replaces the patterned pressure roller 480b. Because of the short residence time and contact time of the resin with the belt 479 in the nip region, it is preferred that the pattern transferred from the belt be easy to replicate (e.g., very shallow prisms) in order to achieve acceptable replication fidelity on both sides of the patterned sheet.

The extrusion casting process shown in Figure 12C is identical to that shown in Figure 12B except that the micro-patterned belt 479 partially wraps the patterned roller 480a downstream from the nip. The optical sheet of the present invention is prepared in a single patterning step by replicating one of the patterns from the patterned belt 479 on one surface, and the other from the patterned roller 480a on the opposite surface. Wrapping the patterned belt 479 on the patterned roller 480a for some distance increases the contact time of the resin with the belt 479, and thus enhances replication fidelity of the features from the belt onto the optical sheet.

The extrusion casting process shown in Figure 12D is similar to that shown in Figure 12A, except that the patterned rollers 480a, 480b are replaced with continuous micro-patterned belts 479a and 479b wrapped around driving rollers as shown.

The final double-sided optical sheet 300e made through the process embodiments shown in Figures 12A - 12D has the same cross section as optical sheet 300d shown in Figure 11B. Optical sheet 300e contains a plurality of light guide plate patterns which then must be cut to the final specified length and width dimensions of the designed light guide plate.

In all embodiments comprising a patterned roller, the surface temperature of the patterned roller, T, is preferably greater than Tg - 50°C, more preferably greater than Tg - 30°C and most preferably greater than Tg - 20°C, where Tg is the glass transition of the extruded resin.

The optical sheet produced by any of the embodiments described above is finally transferred to a finishing station wherein it is cut down to a plurality of double-sided light guide plates having the specified length and width dimensions of the designed light guide plates. The light guide plates finished from a single optical sheet may have identical or different dimensions and micropatterns.

Resin Materials

Many polymeric materials can be used to practice this invention. The resin material must be extrudable under typical extrusion conditions, easy to cast and capable of replicating the discrete and/or linear micro-patterns. The material must also be sufficiently stiff and tough to minimize fracture and distortion during practical use. Additionally, the material must possess high levels of transmittance over the visible range of the spectrum and low color. The property most critical to this application is the extinction coefficient. The extinction coefficient or intrinsic optical density (OD) of a material can be com-

puted from $OD = \dfrac{1}{L}\log_{10}(\dfrac{1}{Tr})$, where $Tr$ is the transmittance and L is the optical path length. This property must be as low as possible in order to minimize absorption losses in the light guide plate. Materials useful in this invention include, but are not limited to, PMMA and other acrylic polymers, including impact modified PMMA and copolymers of methyl methacrylate and other acrylic and non-acrylic monomers, polycarbonates, poly cycle olefins, cyclic block copolymers, polyamides, styrenics, polysulfones, polyesters, polyester-carbonates, and various miscible blends thereof. A typical OD for PMMA can vary approximately between 0.0002/mm and 0.0008/mm, while for polycarbonate it typically ranges from 0.0003/mm to 0.0015/mm, depending on the grade and purity of the material.

Examples

Inventive Example 1

Optical sheet 300 has a length $L_S \approx 957$ mm, a width $W_S \approx 343$ mm, and a thickness $D_S$ that varies between 0.1 mm and 0.7 mm. Optical sheet 300 has four light guide plate patterns thereon, each having the same length that varies between 150 mm and 240 mm, and a width that varies between 150 mm and 320 mm. Because all four light guide plates are made together in a roll-to-roll process, each light guide plate is made at under 1 second at a machine line speed of 250 mm per second. Conceivably, for a larger number of smaller light guide plates, e.g., length and width dimensions of about 20 mm, on the same optical sheet 300 and the same pattern roller, the manufacturing time per light guide plate would be even shorter for the same machine line speed.

Inventive Example 2

Optical sheet 300 has a length $L_S \approx 1436$ mm, a width $W_S \approx 686$ mm, and a thickness $D_S$ that varies between 0.1 mm and 0.7 mm. Optical sheet 300 has 14 light guide plate patterns, each having a length that varies between 150 mm and 240 mm, and a width that varies between 150 mm and 320 mm.
The 14 light guide plate patterns have one or more of the following features. In one aspect, at least two of the 14 light guide plates have different lengths. In another aspect, at least two of the 14 light guide plates have different widths. In yet another aspect, at least one of the 14 light guide plates has the same width direction as optical sheet 300. For example, the width direction of light guide plate 250a shown in Figure 1, specified by $W_1$, is parallel to the width direction of optical sheet 300, specified by $W_S$. In yet another aspect, at least one of the 14 light guide plates has a width direction orthogonal to that of optical sheet 300. For example, the width direction of light guide plate 250f, specified by $W_6$, is orthogonal to the width direction of optical sheet 300, specified by $W_S$.
In yet still another aspect, it is possible that the width direction of one of the light guide plates, such as light guide plate 250j, is arranged at an angle between 0 and 90 degrees relative to the width direction of the optical sheet 300. It is also possible that one or more of the light guide plates are not rectangular, but square, circular, or of any other known shapes.
Because typically there is empty space 260 between any two neighboring light guide plates, it is possible to increase the size of the light guide plate from an originally intended light guide plate by including a portion of empty space. Alternatively, the light guide plate can be cut smaller than the originally intended light guide plate. The advantage of the optical sheet having different light guide plates is to produce light guide plates for different LCD applications in a single manufacturing step. Due to lack of sufficient standards in the display industry, different display users may require different sizes of light guide plates. Optical sheet 300 of the present invention provides a low cost solution to meet different requirements from multiple users.

Inventive Example 3

Optical sheet 300 has a length $L_S \approx 1436$ mm, a width WS $\approx 980$ mm, and a thickness $D_S$ that varies between 0.1 mm and 0.7 mm. Optical sheet 300 has 21 light guide plate patterns, each having a length that varies between 150 mm and 240 mm, and a width that varies between 150 mm and 320 mm.
When optical sheet 300 is made at a machine speed of 152 mm/second, it takes about 9.4 seconds to make one optical sheet 300 which comprises 21 light guide plates. On average it takes less than 0.5 second to make one light guide plate, a much higher speed than possible with conventional injection molding of similar light guide plates.

Comparative Example

As a comparison, only a single light guide plate having a length or width greater than about 150 mm can be made in a typical injection molding cycle. Thus, the cycle time per light guide plate would be comparatively long. Multiple light guide plates can be produced per cycle by injection molding but the level of difficulty in doing so, while achieving good replication fidelity for both patterned surfaces, increases significantly with decrease in thickness and increase with length and width of the plate.
In summary, the light guide plates finished from the large optical sheet having a length being at least 0.8 m and a width being at least 0.3 m of the present invention are advantageously made at much higher speed and/or at much larger sizes and smaller thickness than currently feasible with conventional injection molding technology. These light guide plates are also easier to customize to meet the ever changing needs of different users.

## Claims

1. An optical sheet having a plurality of light guide plate patterns, each light guide plate pattern having a micro-patterned output surface for emitting light, and a micro-patterned bottom surface opposing to the output surface, the optical sheet made in steps comprising:

   extruding a first resin into the nip between a pressure roller and a patterned roller to form an extruded layer at a patterned roller surface temperature T1 and a nip pressure P1, the layer having an unpatterned surface and a patterned surface, the patterned surface having a pattern transferred from the patterned roller; and
   printing a discrete pattern on the unpatterned surface of the extruded layer to form the optical sheet comprising the plurality of light guide plate patterns.

2. The optical sheet of claim 1, wherein the optical sheet has a length $L_S$ greater than or equal to 0.8 m.

3. The optical sheet of claim 1, wherein the optical sheet has a width $W_S$ greater than or equal to 0.3 m.

4. The optical sheet of claim 1, wherein the optical sheet has a thickness $D_S$ in a range of between 0.05 mm and about 2 mm.
   2. The light guide plate of claim 1, having a thickness less than or equal to 1.0 mm.

5. The optical sheet of claim 1, wherein the light guide plate patterns have a width and a length that is greater than or equal to 0.15 m.

6. The optical sheet of claim 1, wherein the micro-pattern on the output or bottom surface comprise discrete elements and the micro-patterns on the other principal surface comprise continuous elements.

7. The optical sheet of claim 1, wherein the micro-patterns on both the output surface and the bottom surface comprise discrete elements.

8. The optical sheet of claim 1, wherein T1 is greater than $T_{g1}$ — 50°C with $T_{g1}$ being the glass transition temperature of the extruded resin.

9. The optical sheet of claim 1, wherein the nip pressure P1 is greater than 8 Newtons per millimeter of roller width.

10. The optical sheet of claim 1, wherein the layer is extruded onto a carrier film, and the carrier film is peeled off subsequently.

11. The optical sheet of claim 1, wherein the pattern on the patterned roller is provided from a patterned belt.

12. The optical sheet of claim 1, wherein the extruded resin is either a polycarbonate, an olefinic polymer or an acrylic polymer.

13. The optical sheet of claim 1, wherein the printing step can be ink jet, screen printing, silk screening and the like.

14. The optical sheet of claim 1, wherein the printing ink is a UV-curable resin.

**FIG. 1**

300  $W_S$  $L_S$  $L_8$  $W_8$  $L_9$  $W_9$  $L_{10}$  $W_{10}$  250h 250i 250j 15a 18 $L_5$  $W_5$  $L_6$  $W_6$  $L_7$  $W_7$  250e 15b 14 250f 250g $W_3$  $L_3$  $W_4$  $L_4$  250c 14 260 250d $W_1$  $L_1$  $W_2$  $L_2$  15a 18 250a 15b 250b

**FIG. 2A**    **FIG. 2B**

250  $X$  17  217  16  15b  $D_S$  14  217  $x = 1$  15a  $L_0$  $L$  $W$  $W_0$  $x = 0$  $O$  $Y$  17  18  12  12

**FIG. 2C**

227  $a_1$  $a_4$  $a_2$  $a_5$  $\Delta L_0$  $a_3$  $a_6$  $\Delta W_0$

**FIG. 3A**

**FIG. 3B**

**FIG. 3C**

**FIG. 3D**

EP 2 422 961 A2

**FIG. 4A-1**

**FIG. 4A-2**

**FIG. 4A-3**

**FIG. 4B-1**

**FIG. 4B-2**

**FIG. 4B-3**

**FIG. 4C-1**

**FIG. 4C-2**

**FIG. 4C-3**

EP 2 422 961 A2

*FIG. 5B*

*FIG. 5A*

14

FIG. 6B

$W_{R2}$

$W_{P2}$

$L_{R2}$

254

FIG. 6A

480b

$W_{R2}$

$W_{P2}$

254

R2

**FIG. 7A**

**FIG. 7B**

EP 2 422 961 A2

**FIG. 8A**

**FIG. 8B**

**FIG. 8C**

FIG. 9A

FIG. 9B

**FIG. 10**

**FIG. 11A**

**FIG. 11B**

*FIG. 12B*

*FIG. 12D*

*FIG. 12A*

*FIG. 12C*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5885490 A, Kawaguchi
- US 20070052118 A1, Kudo
- US 20070013100 A1, Capaldo
- US 20080122135 A, Hisanori
- WO 2006098479 A, Takada